# EUROPÄISCHE PATENTANMELDUNG

(11) **EP 4 123 998 A1**
(43) Veröffentlichungstag der Anmeldung: **25.01.2023**
(21) Anmeldenummer: 22178800.3
(22) Anmeldetag: 14.06.2022
(51) Int. Cl.: H04L 67/306, H04L 41/08, H04L 41/0803, G06F 3/048, H04L 41/22, H04L 41/16, G06F 3/0482, G06F 3/04847, G06K 9/62

(54) **VERFAHREN ZUR AUTOMATISCHEN KONFIGURATION EINES ELEKTRISCHEN GERÄTS UND ELEKTRISCHES GERÄT**

(30) Priorität: 21.07.2021 DE 102021118789
(71) Anmelder: Miele & Cie. KG, 33332 Gütersloh (DE)
(72) Erfinder: Janson, Thomas, 33332 Gütersloh (DE)

(57) **Zusammenfassung**

Verfahren zur automatischen Konfiguration eines elektrischen Geräts und elektrisches Gerät Die Erfindung betrifft ein Verfahren zur automatischen Konfiguration eines elektrischen Geräts (1), aufweisend
- Ableiten von Gewohnheiten eines Benutzers (3) jeweils bei Benutzung des elektrischen Geräts (1) auf Basis einer Dateneingabe;
- Schätzen einer Konfiguration für eine zukünftige Benutzung; und
- automatische Konfiguration des elektrischen Geräts (1) anhand der Schätzung zur zukünftigen Benutzung, wobei die automatische Konfiguration ein Anzeigen eines Benutzerprofils (4) und/oder eines in dem elektrischen Gerät (1) hinterlegten Programms (5) zur Durchführung eines Prozesses zum Betreiben des elektrischen Geräts (1) und ggf. eines oder mehrerer im elektrischen Gerät (1) hinterlegten Programmparameter (6) aufweist.

Ferner betrifft die Erfindung ein elektrisches Gerät (1), aufweisend einen Prozessor, der konfiguriert ist, das Verfahren durchzuführen.

## Beschreibung

Die Erfindung betrifft ein Verfahren zur automatischen Konfiguration eines elektrischen Geräts und ein elektrisches Gerät, das nachstehend der Einfachheit halber auch als Gerät bezeichnet wird. Insbesondere betrifft die Erfindung ein Verfahren, bei dem ein elektrisches Gerät automatisch konfiguriert wird, um für einen Benutzer startbereit zu sein, sowie das elektrische Haushaltgerät, das konfiguriert ist, das Verfahren auszuführen.

Die Produktion von elektrischen Geräten in hohen Stückzahlen ermöglicht einen geringen Preis, erlaubt jedoch eine geringe Anpassung an ihre Benutzer. Bei elektronischen Geräten kann eine Maßanfertigung durch individuelle Softwarelösungen oder Konfiguration von Software Abhilfe schaffen. Der Einsatz von Benutzerprofilen kann hierbei ein elektrisches Gerät für beliebig viele Benutzer individualisieren. So kann heutzutage jeder Benutzer beispielsweise mit einem Kaffeevollautomaten als das elektrische Gerät einen Kaffee mit richtiger Stärke und Wassermenge für seinen Geschmack abspeichern und beliebig häufig zubereiten lassen. Während einfache Kaffee-Filtermaschinen durch einen einzigen Ein-AusSchalter leicht zu bedienen sind, nimmt der Schwierigkeitsgrad der Bedienung bei modernen Kaffeevollautomaten durch immer bessere Anpassbarkeit an seine Benutzer zu, was seine Benutzerschnittstellen mit vielen Tasten und großen Touch-Displays deutlich machen.

Muss das Gerät vor der Benutzung durch Auswahl eines Programms oder Benutzerprofils manuell konfiguriert werden, so reduziert sich die Geschwindigkeit oder Effizienz des Geräts durch die Zeit, die für die Konfiguration erforderlich ist. Wenn beispielsweise die Zubereitung eines Kaffees bei einem Kaffeevollautomaten 60 Sekunden dauert und die Auswahl des Benutzerprofils und des Getränks zuvor 10 Sekunden, so dauert die Zubereitung 16% länger. Eine zusätzliche Qualität eines elektrischen Geräts ist aber auch dadurch zu bewerten, wie viel Aufmerksamkeit der Benutzer dem Gerät schenken muss, um es zu bedienen. Die manuelle Konfiguration lenkt den Benutzer von einer anderen Tätigkeit wie etwa Kochen oder einem Gespräch ab. Dadurch wird jede benötigte Bedienung des Geräts von dem Benutzer schnell als nervig empfunden. Die elektrischen Geräte sind für die meisten Benutzer schwierig, umständlich und zeitintensiv zu bedienen.

Weiterhin sind sogenannte intelligente und einfach zu bedienende Geräte auf dem Markt, die dem Benutzer die Konfiguration bei gleichzeitiger Individualisierung abnehmen. Bei Geräten mit Benutzerprofilen ist eine Auswahl des Benutzers notwendig. Es sind Geräte auf dem Markt, die zur Authentifizierung des Benutzers durch Chipkarten, Near-Field-Communication (NFC) mit einem Handy oder Sensoren für biometrische Daten wie Fingerabdruckscanner geeignet sind. Bei Geräten ohne Bezahlsysteme ist eine absolute Sicherstellung, dass ein Benutzer wirklich er selbst ist, nicht zwingend notwendig. Eine Fehlerkennung führt hier nicht zu einem finanziellen Schaden. Kann hier ein Benutzer vom Gerät erkannt werden, führt das zu einer Qualitätssteigerung und das Gerät kann sich automatisch an den Benutzer anpassen. Mit diesen zusätzlichen Sensoren und Technologien wird der Benutzer automatisch erkannt und die Auswahl des Benutzerprofils entfällt. Durch Near-Field-Communication (NFC) kann der Benutzer beispielsweise anhand seines Handys von dem Gerät kontaktlos erkannt werden. Nachteil sind zusätzliche Kosten durch den NFC Chip im Gerät und die Notwendigkeit, dass der Benutzer ein zusätzliches NFC-fähiges Gerät wie ein Handy bei sich tragen muss, um erkannt zu werden. Speziell im Haushaltsbereich ist die Bereitschaft des Benutzers dazu nicht gegeben. Bei Verfahren, die ein Kartenlesegerät zur Benutzererkennung einsetzen, kommt als Nachteil entsprechend der zusätzliche Aufwand beim Einstecken oder Auflegen der Benutzer-Karte hinzu. Beim Einstecken einer Benutzer-Karte kann sich zudem der Verschleiß am Gerät und der Benutzer-Karte erhöhen.

Verfahren zur Benutzererkennung können direkt durch eindeutige Schlüssel realisiert werden. Bei Geräten mit einer Benutzerschnittstelle wie Display, Eingabe-Tasten, Touch-Display usw. kann mit geringer Sicherheit ein Benutzerprofil ausgewählt werden. Die Sicherheit kann dabei erhöht werden, indem der Benutzer ein geheimes Passwort eingibt. Um das Kopieren von Schlüsseln zu verhindern werden analoge und digitale Schlüssel eingesetzt. Wo ein analoger Schlüssel nur Freischaltung bei gültigem Schlüssel sicherstellt, kann ein digitaler Schlüssel wie eine Chipkarte viele Benutzer durch eine digitale Kennung unterscheiden. Chipkarten oder Magnetstreifen müssen in einen Scanner des Geräts eingeführt oder aufgelegt werden, was entsprechenden Aufwand bereitet und auch zu Verschleiß bei Scanner und Karte führen kann. Besser sind drahtlose Lösungen mit z.B. Radio Frequency Identification (RFID) oder Near Field Communication (NFC), wo der Schlüssel nur in der Umgebung des Geräts sein muss.

Bei mehreren RFID Chips in der Umgebung eines Geräts kann die Zuordnung schwerfallen, welcher Chip unmittelbar vor dem Gerät eingesetzt wird und als Schlüssel benutzt werden soll. NFC bietet hier durch seine stark eingeschränkte Reichweite eine erhöhte Sicherheit, dass der Schlüssel physikalisch dicht am Gerät sein muss und Verwechselungen hier ausschließt. Der Nachteil von physikalischen Schlüsseln ist, dass diese für die Nutzung mitgeführt werden müssen. Biometrische Schlüssel wie Fingerabdruck oder Iris-Erkennung können hier Abhilfe schaffen. Da sich solche Merkmale ändern können, wie z.B. der Fingerabdruck durch die Hautoberfläche müssen die Merkmale gegebenenfalls wiederkehrend aufgefrischt werden, was Aufwand für den Benutzer bedeutet. Die direkten Verfahren zur Benutzeridentifikation benötigen meist zusätzliche Hardware, um den Schlüssel zu identifizieren, was mit zusätzlichen Kosten verbunden ist.

Der Erfindung stellt sich somit das Problem, ein Verfahren zur automatischen Konfiguration eines elektrischen Geräts sowie ein elektrisches Gerät bereitzustellen, dass sich an den Benutzer anpasst, ohne dass der Benutzer technische Hilfsmittel zu seiner Identifizierung benötigt.

Erfindungsgemäß wird dieses Problem durch ein Verfahren mit den Merkmalen des Patentanspruchs 1 und ein elektrisches Gerät mit den Merkmalen des Patentanspruchs 10 gelöst. Vorteilhafte Ausgestaltungen und Weiterbildungen der Erfindung ergeben sich aus den nachfolgenden Unteransprüchen.

Das Verfahren und das Gerät sind ausgebildet, vorhersagen zu können, wer der zukünftige Benutzer ist und sich derart automatisch zu konfigurieren, dass der individuelle Wunsch des zukünftigen Benutzers konfiguriert ist, wenn der Benutzer ihn sich durch das Gerät erfüllen will. Dafür werden keine technischen Hilfsmittel seitens des Benutzers benötigt. Dadurch sind das Verfahren und das Gerät kostengünstig und einfach. Ferner gewinnt der Benutzer Zeit, weil er das Gerät nicht konfigurieren muss.

Die Erfindung basiert auf dem Grundgedanken, dass jeder Benutzer Gewohnheiten hat. In der Erfindung werden die Gewohnheiten des oder der Benutzer analysiert und das Gerät anhand der analysierten Gewohnheiten automatisch konfiguriert. Dadurch entfallen oder reduzieren sich manuelle Konfigurationen durch den Benutzer. Durch den Wegfall der Zeit zur Konfiguration wird das Gerät effizienter. Für die Qualität eines Geräts ist nicht nur ausschlaggebend, was das Gerät kann, sondern auch wie der Benutzer die Nutzung empfindet im Sinne von User Experience. Durch eine einfachere Bedienung muss der Benutzer dem Gerät weniger Aufmerksamkeit schenken und die Technologie fällt in den Hintergrund. Weniger Ablenkung führt zu mehr Entspannung, und der Benutzer kann sich bei der Verwendung des Geräts anderen Themen als der Bedienung des Geräts widmen.

Die mit der Erfindung erreichbaren Vorteile bestehen neben der automatischen Konfiguration, die an die zukünftige Benutzung bzw. den Benutzer des Geräts angepasst ist, darin, dass die Benutzererkennung indirekt erfolgt. Der Benutzer benötigt keine technischen Hilfsmittel und braucht das Gerät nicht selbst zu konfigurieren.

Die Erfindung betrifft ein Verfahren zur automatischen Konfiguration eines elektrischen Geräts, aufweisend
- Ableiten von Gewohnheiten eines Benutzers jeweils bei Benutzung des elektrischen Geräts auf Basis einer Dateneingabe;
- Schätzen einer Konfiguration für eine zukünftige Benutzung; und
- automatische Konfiguration des elektrischen Geräts anhand der Schätzung zur zukünftigen Benutzung, wobei die automische Konfiguration ein Anzeigen eines Benutzerprofils und/oder eines in dem elektrischen Gerät hinterlegten Programms zur Durchführung eines Prozesses zum Betreiben des elektrischen Geräts und ggf. von einem in dem elektrischen Gerät hinterlegten Programmparameter aufweist.

Das Verfahren sieht maschinelles Lernen vor, bei dem das Benutzerverhalten durch die Nutzung aufgenommen wird, daraus die Gewohnheiten abgeleitet werden, und ein Schätzer die Konfiguration für die zukünftige Benutzung des Geräts vorhersagt.

Unter den Ausdruck "Ableiten" ist zu verstehen, dass die Gewohnheit des Benutzers aus der Dateneingabe hergeleitet wird.

Der Ausdruck "Gewohnheiten" bedeutet eine durch häufige und stete Wiederholung selbstverständlich gewordene Handlung des Benutzers an dem Gerät. Gewohnheiten können durch viele Faktoren charakterisiert werden, wie etwa zeitlich wiederkehrendes Verhalten wie beispielsweise eine Bedienung des Kaffeeautomaten als das elektrische Gerät jeden Morgen um 7 Uhr oder die Präferenz des Benutzers wie beispielsweise Trinken von schwarzem Kaffee, oder die Kombination aus mehreren Eigenschaften wie das Trinken eines Espressos nach dem Abendessen. Solche Faktoren bilden die Dateneingabe in den Schätzer und seine Ausgabe ist die Vorhersage für die Konfiguration bei der zukünftigen Benutzung. Beispielsweise ist es eine Gewohnheit des Benutzers mittels des Geräts jeden Morgen um 7 Uhr einen Kaffee zuzubereiten. Aus der morgendlichen Handlung jeden Tag an dem Gerät um 7 Uhr ein Kaffeeprogramm auszuwählen, wird mittels des Verfahrens die Gewohnheit, dies zu tun, abgeleitet, so dass in Zukunft das Gerät automatisch so konfiguriert wird, dass jeden Morgen um 7 Uhr das entsprechende Kaffeeprogram an dem Gerät angezeigt wird, so dass es startklar ist.

Unter dem Ausdruck "Schätzen" ist zu verstehen, dass die Konfiguration der zukünftigen Benutzung näherungsweise bestimmt wird und als zukünftige Benutzung für am wahrscheinlichsten gehalten wird.

Der Ausdruck "Konfiguration" bedeutet, dass die Software an die Bedürfnisse des Benutzers durch Auswahl von geeigneten Softwareparametern und/oder -Komponenten angepasst wird. Die Abläufe von z.B. Getränkezubereitungen sind meist durch Daten/Parameter dargestellt (z.B. eine Sequenz, welcher Verbraucher für welche Zeit mit welcher Temperatur benutzt wird), und je nach Ablauf wird dann eine Softwarekomponente z.B. für Milchschaumerzeugung benutzt.

Im Kontext der vorliegenden Anmeldung ist "Benutzer" synonym mit "Benutzergruppe" zu verstehen. Denkbar ist nämlich etwa folgendes Szenario: ein Kaffeevollautomat hat drei häufige Benutzer. Ein Nutzer hat ein eigenes Profil, zwei finden das Standard-Profil genau richtig und nutzen nur das. Der Schätzer würde aus seiner Sicht somit die zwei Benutzer als einen Benutzer wahrnehmen bzw. zu einer Benutzergruppe zusammenfassen.

Das Verfahren weist bevorzugt die Verwendung statistischer Verfahren auf. Dies können neuronale Netze sein. Das elektrische Gerät ist bevorzugt mit Standard-Konfigurationen hergestellt und wird mittels des erfindungsgemäßen Verfahrens beim Benutzer oder den Benutzern des elektrischen Geräts an das Benutzerverhalten angepasst, so dass es automatisch entsprechend dem Benutzerverhalten konfiguriert wird.

Das Verfahren ist ausgebildet, Wissen und Zusammenhänge aus Daten abzuleiten insbesondere wird indirekt anhand der Dateneingabe auf die gewünschte Konfiguration des Geräts geschlossen. Die Benutzerkonfiguration mit Auswahl eines Benutzerprofils und/oder eines Programms und ggf. Programmparameters an dem Gerät reduziert sich oder entfällt ganz.

Das maschinelle Lernen des Verfahrens beruht auf der Idee, dass ein Zusammenhang zwischen Nutzerverhalten und Umgebungseigenschaften wie Uhrzeit und Außentemperatur besteht. Wenn das elektrische Gerät der Kaffeevollautomat ist, hat der Benutzer beispielsweise die Gewohnheit am Morgen einen starken Kaffee zu trinken, aber ändert möglicherweise seine Gewohnheit in Abhängigkeit von der Außentemperatur. Beispielsweise trinkt er bei einer hohen Außentemperatur weniger Kaffee oder eine kleinere Tasse als bei einer niedrigeren Außentemperatur.

Je häufig die Vorhersage des Schätzers zutrifft und die automatische Konfiguration des elektrischen Geräts stimmt und desto mehr Benutzereingaben gespart werden können, desto effizienter ist das Verfahren. Das Benutzerverhalten ist dann gut vorhersehbar, wenn dabei an dem elektrischen Gerät keine zufälligen Prozesse stattfinden. Daher ist es bevorzugt ein Haushaltsgerät, das privat im Haushalt oder im Kleingewerbe wie einem Büro eingesetzt wird. Zufällige Prozesse, dass 10 Personen in einer beliebigen Reihenfolge an dem elektrischen Gerät beispielsweise für einen Kaffee anstehen, sind hier nicht der Fall. Hier trifft man häufig zeitliche Routinen an, die etwa durch den Biorhythmus, Arbeitszeiten und/oder Kinderbetreuung geprägt sind und die Nutzung des elektrischen Geräts widerspiegeln.

Das Verfahren ist bevorzugt ausgebildet, Regeln zu erlernen, anhand von denen es die Gewohnheiten ableiten kann. Regeln und Gewohnheiten, die abgeleitet werden können, sind beispielsweise:
- Ein von dem Benutzer bevorzugt ausgewähltes Programm, das optional von einer Uhrzeit abhängen kann. Hierbei ist die Regel, dass der Benutzer das Programm auswählt, woraus die Gewohnheit dieses Benutzers abgeleitet wird, dieses Programm auszuwählen. Dabei kann die Gewohnheit von einer bestimmten Uhrzeit abhängen.
- Eine Routine der Benutzer, ein bestimmtes Programm auszuwählen. Das Gerät wird für die zukünftige Benutzung derart automatisch konfiguriert, dass das Benutzerprofil des Benutzers angezeigt wird, der das elektrische Gerät am wahrscheinlichsten als nächstes benutzt. Beispielsweise wird sich ein Benutzer, der einen Kaffeevollautomaten als das elektrische Gerät gerade benutzt hat und einen Kaffee bereitet hat, direkt nach der Zubereitung keinen zweiten Kaffee zubereiten. Bei einem Haushalt mit Kaffeetrinkern wechselt sich das Benutzerprofil daher häufig ab und kann nach einer Benutzung auf ein jeweils anderes Benutzerprofil umgeschaltet werden. Hierbei ist die Regel, dass mehrere Benutzer abwechselnd das elektrische Gerät benutzen, woraus die Gewohnheit abgeleitet wird, dass die Benutzer das Gerät nicht mehrmals direkt hintereinander benutzen, sondern mehrere Benutzer das elektrische Gerät hintereinander benutzen.
- Es sind bei einem Mehr-Personen-Haushalt wie einem Zwei-Personen-Haushalt zu bestimmten Zeiten nicht beide Personen gleichzeitig zu Hause. Dies kann beispielsweise mittels Sensoren des elektrischen Geräts erkannt werden oder mittels Sensoren eines weiteren elektrischen Geräts sensiert werden, und die sensierten Anwesenheitsdaten dann an das elektrische Gerät übermittelt werden. Anhand der Anwesenheitsdaten kann geschätzt werden, welcher Benutzer das elektrische Gerät als nächstes benutzen wird. Die Anwesenheitsdaten können auch unterschiedliche Aufstehzeiten oder auch Arbeitszeiten (z.B. Teilzeit) umfassen. Hierbei ist die Regel, dass nur der Benutzer das elektrische Gerät als nächster verwenden wird, der auch zur nächsten erwarteten Benutzungszeit anwesend ist, woraus die Gewohnheit ableitbar ist, dass der anwesende Benutzer als nächstes das elektrische Gerät benutzen wird.
- Die Regel und Gewohnheit kann sich auch in Zeitangaben widerspiegeln. Beispielsweise sind in dem elektrischen Gerät Datum- und Zeitangabe entsprechend von Zeitzonen hinterlegt oder werden dem elektrischen Gerät übermittelt. Hierbei wird in Betracht gezogen, dass zeitliche oder auch kulturelle Unterschiede die Auswahl von Programmen wie Kaffeezubereitungsprogrammen beeinflussen können. So wird beispielsweise ein Espresso in Deutschland häufiger mittags getrunken, während in Italien oder Spanien Espresso auch nach einem Abendessen getrunken wird, was beispielsweise die Regel ist. Daraus wird die Gewohnheit abgeleitet, welches Programm der Benutzer zukünftig wann benutzt.
- Die Gewohnheit eines Benutzers kann sich aus einem Aufwand in der Verwendung des elektrischen Geräts ableiten. Wenn das elektrische Gerät der Kaffeevollautomat ist, spiegelt sich beispielsweise der Aufwand der Zubereitung des Kaffeegetränks wider: Beispielsweise bereitet sich der Benutzer mittels des elektrischen Geräts morgens einen Wachmacher-Kaffee zu, der schnell zubereitet ist, während er sich einen Cappuccino oder Milchkaffee, deren Zubereitung aufwändiger und zeitintensiver ist, eher nachmittags oder am Wochenende zubereitet, wo Zeit für den Genuss und auch die Reinigung mit Milch vorhanden ist. Hierbei ist die Regel, dass an einem Arbeitstag am Morgen keine aufwändige und zeitintensive Verwendung stattfindet, während dies am Wochenende oder nachmittags durchaus anders ist. Anhand des Aufwands der Verwendung und der Zeit wird die Gewohnheit abgeleitet, welches Programm der Benutzer wann verwendet.

Mittels der Dateneingabe werden Daten erfasst und bereitgestellt, um analysiert zu werden, so dass aus der Dateneingabe Gewohnheiten angeleitet werden.

In einer bevorzugten Ausführungsform ist die Dateneingabe eine Benutzereingabe. Bevorzugt weist die Benutzereingabe ein Auswählen eines in dem elektrischen Gerät hinterlegten Benutzerprofils, Programms und/oder Programmparameters auf. Sind diese bereits richtig vom Verfahren vorausgesagt und voreingestellt, so entfällt die Auswahl seitens des Nutzers. Ansonsten wird das Auswählen vom Benutzer durchgeführt. Bevorzugt kann mittels des Verfahrens erkannt werden, ob der Benutzer das automatisch konfigurierte und angezeigte Benutzerprofil oder Programm startet. Das Programm und zugehörige Programmparameter sind in dem elektrischen Gerät bevorzugt hinterlegt. Das Programm und die Programmparameter hängen von dem elektrischen Gerät ab. Im Falle einer Waschmaschine ist ein Programm ein Waschprogramm zum Waschen von Wäsche wie beispielsweise "Baumwolle 90°C" oder "Feinwäsche 30°C", während Programmparameter beispielsweise "Durchführen von Vorwäsche", eine einstellbare Zeit wie "kurz" oder eine einstellbare Schleuderdrehzahl sind. Wenn das Gerät ein Kaffeevollautomat kann das Programm beispielsweise ein Programm zum Zubereiten von Kaffee, Cappuccino oder Espresso sein, während Programmparameter beispielsweise eine Zugabe von Zusätzen zu dem gewählten Programm wie "Milch", "Zucker" oder eine Mengeneinstellung wie "große Tasse", "extra stark" oder "doppelter" sein kann.

Alternativ oder zusätzlich bevorzugt ist eine Übermittlung der vom elektrischen Gerät erfassten, hinterlegten und/oder von einem anderen elektrischen Gerät übermittelten Daten an einen Prozessor des elektrischen Geräts. Die Daten können beispielsweise sensorisch erfasst werden. Bevorzugt weisen die Daten eine aktuelle Zeit, eine aktuelle Temperatur und/oder einen aktuellen Ort auf. Alternativ oder zusätzlich bevorzugt weist die Erfassung von Daten eine Erfassung von der aktuellen Außentemperatur und/oder eines Raums auf, in dem das elektrische Gerät angeordnet ist. Alternativ oder zusätzlich bevorzugt weist die Erfassung von Daten eine Erfassung von der Beladung des elektrischen Geräts, der Form, Gewicht und/oder Größe der Beladung auf. Beispielsweise kann der Kaffeevollautomat als das elektrische Gerät sensieren, ob er mit einer Kaffeetasse oder einer Espressotasse beladen wird, weil sie unterschiedliche Formen, Gewichte und/oder Größen aufweisen. Die sensorisch erfassten und/oder übermittelten Daten verbessern weiterhin die Qualität des Schätzers und damit des Verfahrens.

Eine oder mehrere mittels Sensorik des Geräts oder durch eine andere Quelle wie beispielsweise mittels Übermittlung des weiteren elektrischen Geräts erhaltene Daten sind als Dateneingabe bevorzugt: Zeit, Ort, Benutzereingabe, Temperatur, Tagesablauf des Benutzers, Gewicht der Beladung, Größe der Beladung und/oder Form der Beladung.

Die Zeit kann beispielsweise im elektrischen Gerät hinterlegt sein. Alternativ oder zusätzlich kann das elektrische Gerät ausgebildet sein, mit dem Internet und/oder dem weiteren elektrischen Gerät zu kommunizieren und darüber die Zeit erfassen. Anhand der Zeit kann beispielsweise der Benutzer identifiziert werden oder ein von ihm gewünschtes Programm beispielsweise in Abhängigkeit der Jahreszeit abgeleitet werden.

Der Ort kann beispielsweise im elektrischen Gerät hinterlegt sein. Alternativ oder zusätzlich kann das elektrische Gerät ausgebildet sein, mit dem Internet und/oder dem weiteren elektrischen Gerät zu kommunizieren und darüber den Ort erfassen. Der Ort kann beispielsweise ein Indiz für kulturelle Unterschiede sein, aus denen eine Gewohnheit abgeleitet wird.

Die Benutzereingabe kann an dem elektrischen Gerät mittels des Benutzers oder durch Übermittlung von dem weiteren elektrischen Gerät erfasst werden. Beispielsweise kann der Benutzer die Benutzereingabe über einen Touchscreen oder einen Drehschalter eingeben. Aus der Benutzereingabe kann die Identität des Benutzers abgeleitet werden und/oder ein Zustand. Der abgeleitete Zustand ist beispielsweise ein Programmparameter wie beispielsweise die Kaffeestärke bei einem Kaffeeautomaten. Der Benutzer kann z.B. ein mobiles Endgerät zur Konfiguration des elektrischen Geräts nutzen und damit die Identifizierung vereinfachen, wobei es nicht nur direkte Fallkonstellationen mit personenbezogenem mobilem Endgerät, sondern auch indirekte Fallkonstellationen bei z.B. nicht personenbezogenem mobilem Endgerät beispielsweise im Haushalt gibt.

Des Weiteren können auch bei Verwendung von kapazitiven Touchtasten und/oder Display bei der Benutzereingabe Daten erfasst werden, wie beispielsweise die Hand- und/oder Fingergröße, welche ein Indiz ist, ob ein Mann und/oder eine Frau die Benutzereingabe durchführt. Benutzer weisen ein individuelles Verhalten bei der Eingabe wie z.B. eine Geschwindigkeit des Tippens auf, die ebenfalls als Daten erfasst werden kann.

Der Tagesablauf kann das elektrische Gerät beispielsweise über das weitere elektrische Gerät übermittelt bekommen. Beispielsweise übermittelt das weitere elektrische Gerät, dass ein Programm bei ihm durchgeführt worden ist und daraus wird abgeleitet, welches Programm danach an dem elektrischen Gerät durchgeführt wird. Z.B. ist das weitere elektrische Gerät ein Herd, dass einem Kaffeeautomaten als das elektrische Gerät Daten darüber übermittelt, dass Essen auf dem Herd zubereitet worden ist, woraus mittels des Verfahrens abgeleitet wird, dass der Benutzer gewohnheitsgemäß anschließend einen Kaffee trinkt, so dass der Kaffeeautomat entsprechend automatisch konfiguriert wird.

Das Gewicht der Beladung kann das elektrische Gerät sensorisch erfassen, beispielsweise über einen Drucksensor oder einen oder mehrere andere Sensoren. Aus diesem Beladungsmerkmal kann dann die Gewohnheit des Benutzers abgeleitet werden.

Die Größe und/oder Form der Beladung kann mittels eines oder mehreren Sensoren des elektrischen Geräts erfasst werden beispielsweise mittels einer Abstandssensorik oder einer Kamera. Wenn das elektrische Gerät ein Kaffeevollautomat ist, kann beispielsweise eine Größe und/oder Form der vom Benutzer in das elektrische Gerät platzierten Tasse sensiert und daraus die Gewohnheit als Beladungsmerkmal abgeleitet werden, dass der Benutzer beispielsweise einen Espresso oder einen Kaffee trinkt.

Das weitere elektrische Gerät kann ein mobiles Endgerät wie beispielsweise ein Handy oder Smartphone sein. Das weitere elektrische Gerät kann auch ein Gerät sein, das sich mit dem elektrischen Gerät in einem Raum wie beispielsweise einer Küche befinden kann. Beispielsweise können ein Herd, ein Pizzaofen, ein Dampfgarer, ein Backofen, ein Kaffeeautomat, eine Mikrowelle, Waschmaschine, Trockner, Waschtrockner und/oder Geschirrspüler ausgebildet sein, miteinander zu kommunizieren, wobei wahlweise eines der vorstehenden Geräte als das elektrische Gerät fungiert und eines oder mehrere der vorstehenden Geräte als das oder die weiteren elektrischen Geräte fungieren.

In einer bevorzugten Ausführungsform werden die Regeln für die Gewohnheiten des Benutzers erweitert, wenn der Benutzer nach der automatischen Konfiguration und vor Starten des bei der automatischen Konfiguration ein von dem angezeigten Programm verschiedenen Programm oder ein von dem angezeigten Benutzerprofil verschiedenes Benutzerprofil auswählt und startet. Bei falscher automatischer Konfiguration muss der Benutzer die Konfiguration korrigieren, indem er an dem Gerät sein gewünschtes Benutzerprofil oder ein gewünschtes Programm und/oder Programmparameter auswählt. Entweder hat der Schätzer falsch geschätzt, oder der Benutzer hat seine Gewohnheit geändert. Dadurch, dass die Gewohnheiten des Benutzers erweitert werden, wenn der Benutzer die automatische Konfiguration ändert, wird hierbei ein überwachtes Lernen durchgeführt. Die Erkenntnis einer falschen Vorhersage wird bevorzugt genutzt, die Daten über den Benutzer zu erweitern und in Zukunft eine bessere oder andere Vorhersage treffen zu können.

Bevorzugt werden Daten fusioniert. Bevorzugt werden die von mehreren Sensoren erfasste Daten und Umgebungsdaten fusioniert. Die Daten aus mehreren Sensoren und die Umgebungsdaten führen weiterhin zu einer genaueren Schätzung und können weiterhin indirekte Rückschlüsse auf die Identifikation des Benutzers und die Auswahl des Programms und ggf. Programmparameter geben. Verfügt etwa der Kaffeevollautomat als das elektrische Gerät über eine Erkennung der Kaffeetasse, und Benutzer eines Haushalts haben eine Präferenz von verschiedenen Größen, so kann die Tassengröße zusammen mit der Uhrzeit Daten zu einer Schätzung bei der Nutzererkennung liefern. Ebenso korreliert die Tassenform oftmals mit einem Getränk (z.B. Espresso-Tasse vs. Kaffee-Tasse). Die Kombination aus Zeit, Temperatur, Tassengröße eignet sich dann als Datenquelle um eine Vorhersage über ein mögliches Kaffeegetränk zu treffen, das mit dem Kaffeevollautomaten zubereitet werden soll.

In einer bevorzugten Ausführungsform wird die Schätzung anhand statistischer Methoden durchgeführt.

Bevorzugt wird das Verfahren in einer Rechnereinheit des elektrischen Geräts durchgeführt. Dadurch wird Datensicherheit gewährleistet.

Alternativ oder zusätzlich bevorzugt wird das Verfahren in einer Cloud durchgeführt. Dadurch wird eine Rechenkapazität des elektrischen Geräts entlastet.

In einer bevorzugten Ausführungsform weist das Anzeigen des Benutzerprofils und/oder des in dem elektrischen Gerät hinterlegten Programms zur Durchführung eines Prozesses zum Betreiben des elektrischen Geräts und ggf. von einer in dem elektrischen Gerät hinterlegte Programmparameter das Anzeigen einer Liste mit Benutzerprofilen und/oder Programmen und ggf. Programmparametern auf, wobei eine Reihenfolge der Liste anhand von Wahrscheinlichkeiten sortiert wird. Dadurch reduziert sich die Suchzeit für den Benutzer zum Starten des Geräts, die evtl. mit Scrollen in der Liste verbunden ist.

Der Benutzer kann bevorzugt die automatische Konfiguration anpassen. Beispielsweise kann er sie ein anderes Benutzerprofil oder Programm auswählen, wenn die automatische Konfiguration fehlerhaft war oder wenn er seine Gewohnheit ändert. Der Eingriff des Benutzers stellt ein überwachtes Lernen dar, und der Schätzer kann seine zu Grunde liegende Datenbasis bei jeder Nutzung erweitern, um die Schätzung zu verbessern.

Bevorzugt werden Daten der Dateneingabe in Statistiken aggregiert. Dadurch wird weiterhin der Datenschutz sichergestellt. Dadurch wird eine genaue Nachverfolgbarkeit des Benutzers verhindert. Hierbei kann lokales Lernen auf dem elektrischen Gerät eine höhere Datensicherheit gewährleisten. Bevorzugt wird das Verfahren daher dann in der Rechnereinheit des elektrischen Geräts durchgeführt.

Die Erfindung betrifft ferner ein elektrisches Gerät, aufweisend einen Prozessor, der konfiguriert ist, ein Verfahren nach einer oder mehreren der vorstehend beschriebenen Ausführungsformen durchzuführen.

Das elektrische Gerät weist bevorzugt ein oder mehrere Sensoren auf. Bevorzugt ist es ausgebildet, mit einem oder mehreren weiteren elektrischen Geräten ein- oder bidirektional drahtlos zu kommunizieren.

Das elektrische Gerät ist ein Gerät, das von einem oder mehreren Benutzern benutzbar ist. Bevorzugt ist das elektrische Gerät ein elektrisches Haushaltsgerät. Unter dem Ausdruck "Haushaltsgerät" ist nicht ausschließlich ein im Haushalt privat verwendetes Gerät zu verstehen, sondern vielmehr ein Gerät, das üblicherweise als Haushaltsgerät verwendet wird. Bevorzugt ist es ein Kaffeeautomat, eine Waschmaschine, ein Trockner, ein Waschtrockner, eine Mikrowelle, ein Backofen, ein Dampfgarer und/oder ein Pizzaofen. Besonders bevorzugt ist das elektrische Gerät ein Kaffee(voll)automat.

Das elektrische Gerät kann somit relativ divers ausgestaltet sein. Dabei ist es irrelevant, ob tatsächlich mehrere Benutzer das Gerät benutzen oder nur ein einzelner Benutzer. Ein Kaffeeautomat wird in einem Mehrpersonen-Haushalt oder in einem Büro vermutlich von mehreren Personen benutzt, während eine Waschmaschine auch in dem Mehr-Personen-Haushalt vermutlich nur von einem einzelnen Benutzer verwendet werden wird. Bei der Waschmaschine werden Benutzerprofile daher keine große Anwendung aufweisen, denn die Wäsche des Haushalts wird eher zusammen gewaschen und entsprechend auch die Einstellungen auf den kleinsten gemeinsamen Nenner im Hinblick auf Waschtemperatur und Schleuderdrehzahl abgestimmt. Jedoch kann auch bei nur einem einzelnen Benutzer die Programmvorauswahl vereinfacht werden: Das Verfahren kann analysieren, wie oft Bunt-, Kochwäsche, Pflegeleicht usw. gewaschen werden, woraus die Gewohnheit abgeleitet wird.

Oftmals ergibt sich hier eine Abfolge, wenn sich der Inhalt des Wäschekorbs in mehrere Wäschen mit verschiedenen Waschprogrammen aufteilt. Das Verfahren kann als Regel festlegen, dass nach einer Pflegleicht-Wäsche bei 30°C eine andere Wäsche wie beispielsweise Buntwäsche bei höherer Temperatur durchgeführt wird. Zudem kann das Verfahren als Regel festlegen, dass die Kleidung und somit die zu waschende Wäsche an die Temperatur und Jahreszeit angepasst wird und dass im Sommer häufiger das Pflegleicht-Programm für leichte Oberteile oder Sportbekleidung benutzt wird und dass im Winter die Häufigkeit für die Verwendung das Woll- oder Jeansprogramm steigt.

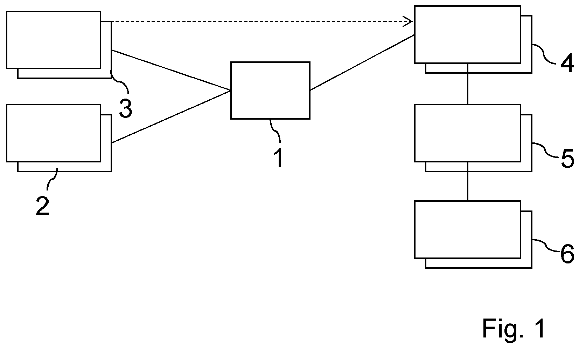

Ein Ausführungsbeispiel der Erfindung ist in den Zeichnungen rein schematisch dargestellt und wird nachfolgend näher beschrieben. Es zeigt schematisch
- Fig. 1: eine Dateneingabe und -ausgabe eines erfindungsgemäßen Verfahrens.

Fig. 1 zeigt eine Dateneingabe und -ausgabe eines erfindungsgemäßen Verfahrens. Das Verfahren zur automatischen Konfiguration eines elektrischen Geräts weist ein Ableiten von Gewohnheiten von Benutzer(n) 3 jeweils bei Benutzung des elektrischen Geräts 1 auf Basis einer Dateneingabe auf. Bei der Dateneingabe können verschiedene Sensoren (nicht gezeigt) dem elektrischen Gerät 1 Daten liefern. Hierbei können sich die Daten auf eine individuelle Beladung 2 des elektrischen Geräts, auf einen einzelnen Benutzer 3, und/oder allgemein auf das elektrische Gerät 1 beziehen. Diese Daten werden dem elektrischen Gerät 1 bereitgestellt, das anhand der bereitgestellten Daten schätzt, welche Konfiguration zukünftig benutzt wird und eine Benutzung eines in dem elektrischen Gerät 1 hinterlegten Benutzerprofils oder Programms vorhersagt; und eine automatische Konfiguration des elektrischen Geräts 1 anhand der Schätzung zur zukünftigen Benutzung durchführt.

Optional können noch (hier nicht gezeigte) weitere elektrische Geräte vorhanden sein, welche die Eingabe von 2 und 3 entgegennehmen und an das elektrische Gerät 1 weiterleiten.

Eine Identifikation des Benutzer 3 wird zur automatischen Konfiguration durchgeführt, wie durch die gestrichelte Linie angedeutet. Die automatische Konfiguration weist ein Anzeigen eines Benutzerprofils 4 und/oder eines in dem elektrischen Geräts 1 hinterlegten Programms 5 zur Durchführung eines Prozesses zum Betreiben des elektrischen Geräts 1 und ggf. von einem in dem elektrischen Gerät 1 hinterlegten Programmparameter 6 als Datenausgabe auf.

### Bezugszeichenliste

- 1: elektrisches Gerät
- 2: Beladung
- 3: Benutzer
- 4: Benutzerprofil
- 5: Programm
- 6: Programmparameter

## Patentansprüche

1. Verfahren zur automatischen Konfiguration eines elektrischen Geräts (1), aufweisend
- Ableiten von Gewohnheiten eines Benutzers (3) jeweils bei Benutzung des elektrischen Geräts (1) auf Basis einer Dateneingabe;
- Schätzen einer Konfiguration für eine zukünftige Benutzung; und
- automatische Konfiguration des elektrischen Geräts (1) anhand der Schätzung zur zukünftigen Benutzung, wobei die automische Konfiguration ein Anzeigen eines Benutzerprofils (4) und/oder eines in dem elektrischen Gerät (1) hinterlegten Programms (5) zur Durchführung eines Prozesses zum Betreiben des elektrischen Geräts (1) und ggf. eines oder mehrerer in dem elektrischen Gerät (1) hinterlegten Programmparameter (6) aufweist.

2. Verfahren nach Anspruch 1, **dadurch gekennzeichnet, dass** die Dateneingabe eine Benutzereingabe und/oder eine Übermittlung von vom elektrischen Gerät (1) erfassten, hinterlegten und/oder von einem anderen elektrischen Gerät übermittelten Daten an einen Prozessor des elektrischen Geräts (1) aufweist, wobei die erfassten, hinterlegten und/oder übermittelten Daten bevorzugt sensorisch erfasste Daten und/oder Umgebungsdaten sind.

3. Verfahren nach Anspruch 1 oder 2, **dadurch gekennzeichnet, dass** die Benutzereingabe ein Auswählen eines in dem elektrischen Gerät (1) hinterlegten Benutzerprofils (4), Programms (5) und/oder Programmparameters (6) aufweist, und/oder dass die erfassten, hinterlegten und/oder übermittelten Daten Zeit, Ort, Benutzereingabe, Temperatur, Tagesablauf des Benutzers, Gewicht der Beladung des elektrischen Geräts (1), Größe der Beladung des elektrischen Geräts (1) und/oder Form der Beladung des elektrischen Geräts (1) aufweisen.

4. Verfahren nach einem der vorangehenden Ansprüche, **dadurch gekennzeichnet, dass** die Gewohnheiten des Benutzers (3) erweitert werden, wenn der Benutzer (3) nach der automatischen Konfiguration und vor Starten des bei der automatischen Konfiguration ein von dem angezeigten Programm (5) oder Benutzerprofil (4) verschiedenes Programm (5) oder Benutzerprofil (4) auswählt und startet.

5. Verfahren nach einem der vorangehenden Ansprüche 2 bis 4, **dadurch gekennzeichnet, dass** die Daten fusioniert werden.

6. Verfahren nach einem der vorangehenden Ansprüche, **dadurch gekennzeichnet, dass** die Schätzung anhand statistischer Methoden durchgeführt wird.

7. Verfahren nach einem der vorangehenden Ansprüche, **dadurch gekennzeichnet, dass** es in einer Rechnereinheit des elektrischen Geräts und/oder in einer Cloud durchgeführt wird.

8. Verfahren nach einem der vorangehenden Ansprüche, **dadurch gekennzeichnet, dass** das Anzeigen des Benutzerprofils (4) und/oder des in dem elektrischen Geräts (1) hinterlegten Programms (5) zur Durchführung eines Prozesses zum Betreiben des elektrischen Geräts (1) und ggf. von einem in dem elektrischen Gerät (1) hinterlegten Programmparameter (6) das Anzeigen einer Liste mit Benutzerprofilen (4) und/oder Programmen (5) und ggf. Programmparametern (6) aufweist, wobei eine Reihenfolge der Liste anhand von Wahrscheinlichkeiten sortiert wird.

9. Verfahren nach einem der vorangehenden Ansprüche, **dadurch gekennzeichnet, dass** die Daten der Dateneingabe in Statistiken aggregiert werden.

10. Elektrisches Gerät (1), aufweisend einen Prozessor, der konfiguriert ist, ein Verfahren nach einem der vorangehenden Ansprüche durchzuführen.
